# EUROPEAN PATENT SPECIFICATION

(11) **EP 3 508 288 B1**
(45) Date of publication and mention of the grant of the patent: **17.07.2024**
(21) Application number: 19150769.8
(22) Date of filing: 08.01.2019
(51) Int. Cl.: B33Y 10/00, B33Y 30/00, B22F 7/08, B22F 10/28, B22F 12/50

(54) **HYBRID ADDITIVE MANUFACTURING**
HYBRIDE GENERATIVE FERTIGUNG
FABRICATION ADDITIVE HYBRIDE

(30) Priority: 08.01.2018 US 201815864771
(43) Date of publication of application: 10.07.2019
(73) Proprietor: RTX Corporation, Farmington, CT 06032 (US)
(72) Inventor: THAYER, Henry H., Wethersfield, CT 06109 (US); TWELVES, Jr., Wendell V., Glastonbury, CT 06033 (US)
(74) Representative: Dehns

(56) References cited:
- WO-A1-2016/152012
- KR-A- 20120 063 385
- US-A1- 2017 014 911
- US-A1- 2017 225 227
- US-A1- 2017 259 329
- US-A1- 2017 299 973
- US-A1- 2017 333 994

## Description

### BACKGROUND

Additive manufacturing is a useful process for forming three-dimensional components by creating successive layers of material. In metal additive manufacturing, metallic powder is spread along a build surface, and an energy source is used to rapidly and locally fuse the powder. The metal solidifies into successive layers that build up to form the desired part.

One of the drawbacks with current metal additive manufacturing processes is that certain geometries, such as downward-facing surfaces or internal passages, can be hard to control. Such geometries can have rough surfaces and/or other defects that can impede fluid flow and compromise the high-cycle fatigue properties of the component. Secondary processing is often required to finish/refine downward-facing, curved, and internal surfaces, which can lead to additional costs and longer time to produce.

A prior art additive manufacturing system having the features of the preamble of claim 1 is disclosed in US 2017/333994 A1. Further prior art systems are provided in KR 2012 0063385 A, WO 2016/152012 A1 and US 2017/259329 A1.

### SUMMARY

According to a first aspect of the present invention, an additive manufacturing system for fabricating a hybrid component is provided as set forth in claim 1.

According to a second aspect of the present invention, a method of fabricating a hybrid component is provided as set forth in claim 4.

### BRIEF DESCRIPTION OF THE DRAWINGS

FIGS. 1A and 1B are simplified illustrations of the claimed additive manufacturing system.
FIGS. 2A and 2B are simplified illustrations of an alternative additive manufacturing system outside the wording of the claims.
FIG. 3 illustrates the steps of forming a hybrid component using the disclosed additive manufacturing systems.

### DETAILED DESCRIPTION

The present invention is directed to a system and method of fabricating a hybrid component using additive manufacturing. During the build process, one or more preform structures are secured to a build platform, and successive layers of metallic powder are deposited over and/or around the preform by a powder deposition device positioned above the preform and build platform. The preform is designed to a desired specification, thus allowing for the fabrication of components with complex geometries and/or high-strength portions that would otherwise be difficult to form using a metal additive manufacturing process.

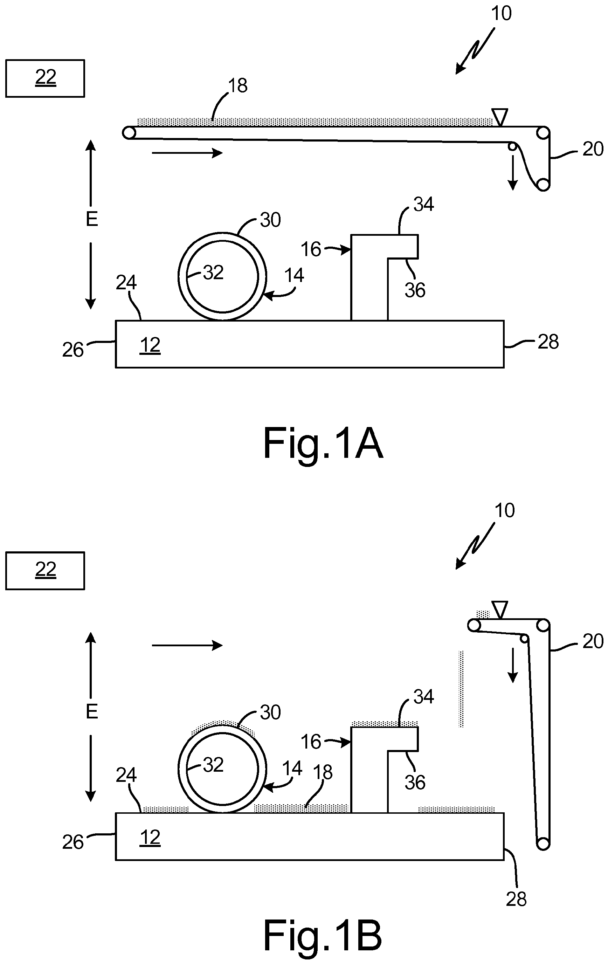

FIGS. 1A and 1B are simplified illustrations of the claimed additive manufacturing system 10. System 10 includes build platform 12, preforms 14 and 16, metallic powder 18, powder distribution device 20, and energy source 22. Build platform 12 can be a generally planar structure and includes platform surface 24, upon which a component can be formed. Build platform 12 further includes first end 26 and an opposing second end 28.

As is shown in FIGS. 1A and 1B, preform 14 is a hollow, cylindrical structure having an outer surface 30 and an inner surface 32. Preform 16 is a flanged structure having upper horizontal surface 34 and downward-facing surface 36. Surfaces 30 and 34, as shown, are higher than platform surface 24, and are generally capable of receiving metallic powder 18. Preforms 14 and 16 can be a metal or metal alloy formed using any traditional or additive manufacturing process known in the art as suitable for fabricating metal components. If necessary, preforms 14 and 16 can undergo secondary processing or finishing (e.g. milling, drilling, or polishing) to achieve desired features or surface finishes. For example, preform 14 can become a portion of a fluid passage, and thus it may be desirable for inner surface 32 to have a smooth finish. Preforms 14 and 16 can be secured to surface 24 of platform 12 using, for example, a welding or a brazing technique. Preforms 14 and 16 can alternatively be secured on or proximate to surface 24 using a fastening device, such as a clamp.

Powder distribution device 20 is located at an elevation E above build platform 12 and the uppermost surfaces of preforms 14 and 16, which are outer surfaces 30 and 34, respectively. In accordance with an aspect of the invention, device 20 is a retractable conveyor belt configured to move over the build platform at elevation E, using a system of moving and fixed rollers. Specifically, device 20 can begin the position shown in FIG. 1A, and move from first end 26 to second end 28 distributing metallic powder 18 at predetermined locations on platform surface 24 and outer surfaces 30 and 34 of preforms 14 and 16. Metallic powder 18 will not be deposited onto inner surface 32 of preform 14, or downward-facing surface 36 of preform 16. When device 20 has reached the position shown in FIG. 1B, it can return to the position shown in FIG. 1A, or to some intermediate position (not shown), depending on the build parameters of the component being formed.

Metallic powder 18 can be a homogenous or heterogeneous metal or metal alloy powder, and can include materials like aluminum, nickel, titanium, cobalt, and chromium, to name a few, non-limiting examples. In some embodiments, metallic powder 18 and one or both of preforms 14 and 16 can be formed from the same material, while in other embodiments, powder 18 and one or both of preforms 14 and 16 can be formed from different materials. Factors influencing materials selection include the process used to fabricate the preforms, compatibility of the preforms and the metallic powder, and the desired mechanical properties of the hybrid component.

Energy source 22 can be used to energize and fuse deposited layers of metallic powder 18. Energy source 22 can be any directed energy source known in the art for use with metal additive manufacturing systems, such as a laser or electron beam. Energy source 22 can be fixed in place, or can be configured to move along build platform 12 in a manner similar to device 20. Device 20 and energy source 22 continue to operate together, depositing and fusing powder in a layer-by-layer fashion, until the hybrid component is formed.

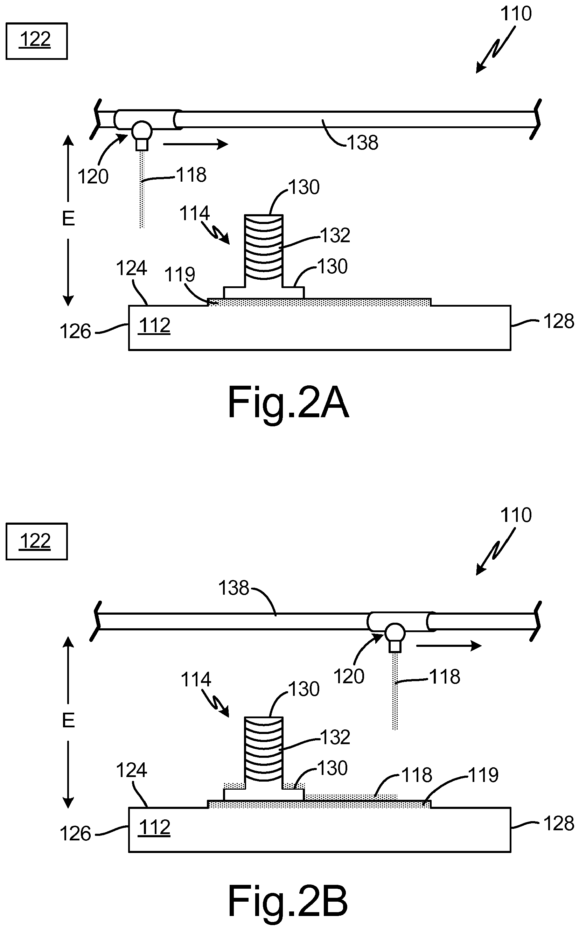

FIGS. 2A and 2B are simplified illustrations of alternative additive manufacturing system 110, outside the wording of the claims. System 110 includes build platform 112, preform 114, metallic powder 118, powder distribution device 120, and energy source 122. Build platform 112, metallic powder 118, and energy source 122 can be formed and/or operate in a manner substantially similar to build platform 12, metallic powder 18, and energy source 22 of system 10.

In the embodiment shown, preform 114 includes generally horizontal surfaces 130, each of which are relatively higher than platform surface 124, and are generally capable of receiving metallic powder 118. Preform 114 also includes threaded surface 132. Preform 114 can be formed in a manner substantially similar to preforms 14 and 16 of system 10. As can be seen in FIGS. 2A and 2B, preform 114 is secured to build platform 112 via a fused layer of metallic powder 119 disposed along platform surface 124 underneath preform 114. Such an arrangement can be desirable depending on how the preform is incorporated into the design of the hybrid component. In other embodiments, preform 114 can be in contact with only a portion of the fused layer, or it can be secured to build platform 112 in any manner discussed above with respect to preforms 14 and 16.

Powder distribution device 120 is configured as a biaxial gantry system, and like device 20, is located at an elevation E above build platform 112 and the uppermost surface of preform 114. In operation, device 120 moves along rail 138 between first end 126 and second end 128 of build platform 112, and deposits metallic powder 118 onto any of surface 124 and surfaces 130. Between each round of deposition, device 120 can further move in a direction orthogonal to its movement along rail 138, in order to deposit metallic powder 118 along the necessary area of build platform 112. Device 120 continues to deposit layers of metallic powder 118, and energy source 122 fuses the layers until the hybrid component is complete. A hybrid component formed with preform 114 can be, for example, a bracket requiring one or more threaded structures.

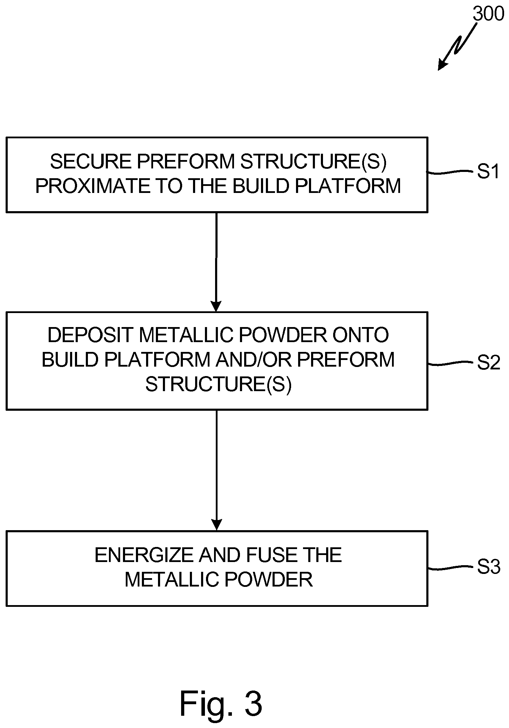

FIG. 3 illustrates method 300 for fabricating a hybrid component using systems 10 and 110. At step S1, one or more preforms are secured proximate to the build platform. At step S2, the powder deposition device deposits metallic powder on the build platform surface and/or the preform surface as it moves from one end of the build platform to another. At step S3, The deposited powder is energized by the directed energy source to form a fused layer. Steps S2 and S3 are repeated, as necessary, until the desired component is formed.

Systems 10 and 110 can include additional and/or alternative features beyond those described above. It is further envisioned that many of the features of systems 10 and 110 can be interchangeable. For example, systems 10 and 110 can include one or more preforms, and the preforms can be uniform in design or vary. Preforms can include additional shapes and geometries, such as fins, apertures, conical, pyramidal, to name a few, non-limiting examples, and can be variably secured to either or both the platform surface and fused metallic powder, or secured above the platform surface in free space. Powder distribution devices 20 and 120 can also be used with either system. Alternative distribution devices, such as a multiaxial robotic arm, are also contemplated. Such a device can be used when more precise deposition of metallic powder at various elevations is desired, as well as deposition along non-horizontal surfaces. The disclosed systems can alternatively use a fluidized bed powder distribution device to deposit metallic powder onto the build plate and/or preforms. Platforms 12 and 112 can be formed as generally planar structures, or can be formed with contours or other surface features to facilitate the securing of the preforms, or to correspond to a desired shape of an additively manufactured portion of the hybrid component.

Systems 10 and 110 can be used to form any number of hybrid components for use in aerospace, such as turbine engine cooling system components, flow control manifolds, fluid/resin distribution manifolds, heat exchangers, airfoils, and more. The disclosed systems and method are further applicable to automotive, maritime, and other transportation industries, as well as industrial and power generation systems.

While the invention has been described with reference to an exemplary embodiment(s), it is intended that the invention is not limited to the particular embodiment(s) disclosed, but that the invention will include all embodiments falling within the scope of the appended claims.

## Claims

1. An additive manufacturing system (10) for fabricating a hybrid component, the system (10) comprising:
a build platform (12) comprising a platform surface (24) located at a first elevation;
a first preform structure (14) secured proximate to the build platform (12), the first preform structure (14) comprising a first preform surface (30) located at a second elevation, and a second preform surface (32), wherein the first preform surface (30) is an uppermost, outer surface of the first preform structure (14); and
a powder deposition device (20) disposed above the build platform (12) at a third elevation (E), wherein the third elevation (E) is greater than the first and second elevations, **characterised in that**:
the system further comprises a second preform structure (16) secured proximate to the build platform (12), the second preform structure (16) comprising an outer surface (34) and a downward-facing surface (36), wherein the outer surface (34) is an uppermost surface of the second preform structure (16), the second preform surface (32) is an internal surface, and the powder deposition device (20) is configured to deposit a metallic powder (18) onto the platform surface (24), the first preform surface (30) and the outer surface (34) but not onto the second preform surface (32) or the downward-facing surface (36); and
wherein the powder deposition device (20) comprises a retractable conveyor belt (20).

2. The system of claim 1, wherein the second elevation is greater than the first elevation.

3. The system of claim 1 or 2, further comprising a directed energy source (22) configured to energize and fuse the metallic powder (18).

4. A method (300) of fabricating a hybrid component, the method (300) comprising:
securing a first preform structure (14) and a second preform structure (16) proximate to a build platform (12), the first preform structure (14) comprising a first preform surface (30) and a second preform surface (32) and the second preform structure (16) comprising an outer surface (34) and a downward-facing surface (36), wherein the second preform surface (32) is an internal surface, the first preform surface (30) is an uppermost, outer surface of the first preform structure (14), and the outer surface (34) is an uppermost surface of the second preform structure (16);
depositing a first amount of a metallic powder (18) onto a platform surface (24), the platform surface (24) being located at a first elevation;
depositing a second amount of the metallic powder (18) onto the first preform surface (30), the first preform surface (30) being located at a second elevation, and depositing a third amount of the metallic powder (18) onto the outer surface (34), but not depositing the metallic powder (18) onto the second preform surface (32) or the downward-facing surface (36), wherein the first, second and third amounts of the metallic powder (18) are deposited using a powder deposition device (20) disposed above the build platform (12) at a third elevation (E) greater than the second elevation;
energizing the first, second and third amounts of the metallic powder (18) to form a fused layer; and
repeating the depositing and energizing steps to form the hybrid component, the hybrid component comprising the first and second preform structures (14, 16) and a plurality of fused layers.

5. The method of claim 4, wherein the second elevation is greater than the first elevation.

6. The method of claim 4 or 5, wherein the powder deposition device (20) comprises a retractable conveyor belt (20).

7. The method of claim 4, 5 or 6, wherein securing the first and second preform structures (14, 16) comprises brazing or welding the first and second preform structures (14, 16) to a surface (24) of the build platform (12).

8. The method of any of claims 4 to 7, wherein energizing the metallic powder (18) is performed by a directed energy source (22), and, optionally, the directed energy source (22) is a laser or an electron beam.

9. The method of any of claims 4 to 8, wherein the metallic powder (18) comprises a metal or metal alloy selected from the group consisting of aluminum, nickel, titanium, cobalt, chromium, and combinations thereof.

10. The method of any of claims 4 to 9, wherein the first and/or second preform structure (14, 16) is formed from the same material as the metallic powder (18).

## Patentansprüche

1. System zum generativen Fertigen (10) zum Herstellen einer hybriden Komponente, wobei das System (10) umfasst:
eine Bauplattform (12), umfassend eine Plattformoberfläche (24), die auf einer ersten Höhe lokalisiert ist;
eine erste Vorformstruktur (14), die nahe der Bauplattform (12) gesichert ist, wobei die erste Vorformstruktur (14) eine erste Vorformoberfläche (30), die auf einer zweiten Höhe lokalisiert ist, und eine zweite Vorformoberfläche (32) umfasst, wobei die erste Vorformoberfläche (30) eine oberste, äußere Oberfläche der ersten Vorformstruktur (14) ist; und
eine Pulverabscheidungsvorrichtung (20), die oberhalb der Bauplattform (12) auf einer dritten Höhe (E) angeordnet ist, wobei die dritte Höhe (E) größer ist als die erste und zweite Höhe,
**dadurch gekennzeichnet, dass**:
das System ferner eine zweite Vorformstruktur (16) umfasst, die nahe der Bauplattform (12) gesichert ist, wobei die zweite Vorformstruktur (16) eine äußere Oberfläche (34) und eine nach unten gerichtete Oberfläche (36) umfasst, wobei die äußere Oberfläche (34) eine oberste Oberfläche der zweiten Vorformstruktur (16) ist, die zweite Vorformoberfläche (32) eine innere Oberfläche ist, und die Pulverabscheidungsvorrichtung (20) dazu konfiguriert ist, ein Metallpulver (18) auf die Plattformoberfläche (24), die erste Vorformoberfläche (30) und die äußere Oberfläche (34), aber nicht auf die zweite Vorformoberfläche (32) oder die nach unten gerichtete Oberfläche (36) abzuscheiden; und
wobei die Pulverabscheidungsvorrichtung (20) ein einziehbares Förderband (20) umfasst.

2. System nach Anspruch 1, wobei die zweite Höhe größer ist als die erste Höhe.

3. System nach Anspruch 1 oder 2, ferner umfassend eine gerichtete Energiequelle (22), die dazu konfiguriert ist, das Metallpulver (18) mit Energie zu versorgen und zu schmelzen.

4. Verfahren (300) zum Herstellen einer hybriden Komponente, wobei das Verfahren (300) umfasst:
Sichern einer ersten Vorformstruktur (14) und einer zweiten Vorformstruktur (16) nahe einer Bauplattform (12), wobei die erste Vorformstruktur (14) eine erste Vorformoberfläche (30) und eine zweite Vorformoberfläche (32) umfasst und die zweite Vorformstruktur (16) eine äußere Oberfläche (34) und eine nach unten gerichtete Oberfläche (36) umfasst, wobei die zweite Vorformoberfläche (32) eine innere Oberfläche ist, die erste Vorformoberfläche (30) eine oberste, äußere Oberfläche der ersten Vorformstruktur (14) ist und die äußere Oberfläche (34) eine oberste Oberfläche der zweiten Vorformstruktur (16) ist;
Abscheiden einer ersten Menge eines Metallpulvers (18) auf einer Plattformoberfläche (24), wobei die Plattformoberfläche (24) auf einer ersten Höhe lokalisiert ist;
Abscheiden einer zweiten Menge des Metallpulvers (18) auf der ersten Vorformoberfläche (30), wobei die erste Vorformoberfläche (30) auf einer zweiten Höhe lokalisiert ist, und Abscheiden einer dritten Menge des Metallpulvers (18) auf der äußeren Oberfläche (34), aber nicht Abscheiden des Metallpulvers (18) auf der zweiten Vorformoberfläche (32) oder der nach unten gerichteten Oberfläche (36), wobei die erste, zweite und dritte Menge des Metallpulvers (18) unter Verwendung einer Pulverabscheidungsvorrichtung (20) abgeschieden werden, die oberhalb der Bauplattform (12) auf einer dritten Höhe (E) größer als die zweite Höhe angeordnet ist;
Versorgen der ersten, zweiten und dritten Menge des Metallpulvers (18) mit Energie, um eine verschmolzene Schicht zu bilden; und
Wiederholen der Schritte des Abscheidens und des Versorgens mit Energie, um die hybride Komponente zu bilden, wobei die hybride Komponente die erste und zweite Vorformstruktur (14, 16) und eine Vielzahl von verschmolzenen Schichten umfasst.

5. Verfahren nach Anspruch 4, wobei die zweite Höhe größer ist als die erste Höhe.

6. Verfahren nach Anspruch 4 oder 5, wobei die Pulverabscheidungsvorrichtung (20) ein einziehbares Förderband (20) umfasst.

7. Verfahren nach Anspruch 4, 5 oder 6, wobei Sichern der ersten und zweiten Vorformstruktur (14, 16) Löten oder Schweißen der ersten und zweiten Vorformstruktur (14, 16) an einer Oberfläche (24) der Bauplattform (12) umfasst.

8. Verfahren nach einem der Ansprüche 4 bis 7, wobei Versorgen des Metallpulvers (18) mit Energie durch eine gerichtete Energiequelle (22) durchgeführt wird, und optional die gerichtete Energiequelle (22) ein Laser oder ein Elektronenstrahl ist.

9. Verfahren nach einem der Ansprüche 4 bis 8, wobei das Metallpulver (18) ein Metall oder eine Metalllegierung umfasst, ausgewählt aus der Gruppe, die aus Aluminium, Nickel, Titan, Kobalt, Chrom und Kombinationen davon besteht.

10. Verfahren nach einem der Ansprüche 4 bis 9, wobei die erste und/oder zweite Vorformstruktur (14, 16) aus dem gleichen Material wie das Metallpulver (18) gebildet wird.

## Revendications

1. Système de fabrication additive (10) pour fabriquer un composant hybride, le système (10) comprenant :
une plateforme de construction (12) comprenant une surface de plateforme (24) située à une première hauteur ;
une première structure de préforme (14) fixée à proximité de la plateforme de construction (12), la première structure de préforme (14) comprenant une première surface de préforme (30) située à une deuxième hauteur, et une seconde surface de préforme (32), dans lequel la première surface de préforme (30) est une surface externe supérieure de la première structure de préforme (14) ; et
un dispositif de dépôt de poudre (20) disposé au-dessus de la plateforme de construction (12) à une troisième hauteur (E), dans lequel la troisième hauteur (E) est supérieure aux première et deuxième hauteurs,
**caractérisé en ce que** :
le système comprend en outre une seconde structure de préforme (16) fixée à proximité de la plateforme de construction (12), la seconde structure de préforme (16) comprenant une surface externe (34) et une surface orientée vers le bas (36), dans lequel la surface externe (34) est une surface supérieure de la seconde structure de préforme (16), la seconde surface de préforme (32) est une surface interne, et le dispositif de dépôt de poudre (20) est configuré pour déposer une poudre métallique (18) sur la surface de plateforme (24), la première surface de préforme (30) et la surface externe (34) mais pas sur la seconde surface de préforme (32) ou sur la surface orientée vers le bas (36) ; et
dans lequel le dispositif de dépôt de poudre (20) comprend une bande transporteuse rétractable (20).

2. Système selon la revendication 1, dans lequel la deuxième hauteur est supérieure à la première hauteur.

3. Système selon la revendication 1 ou 2, comprenant en outre une source d'énergie dirigée (22) configurée pour alimenter en énergie et faire fondre la poudre métallique (18).

4. Procédé (300) de fabrication d'un composant hybride, le procédé (300) comprenant :
la fixation d'une première structure de préforme (14) et d'une seconde structure de préforme (16) à proximité d'une plateforme de construction (12), la première structure de préforme (14) comprenant une première surface de préforme (30) et une seconde surface de préforme (32), et la seconde structure de préforme (16) comprenant une surface externe (34) et une surface orientée vers le bas (36), dans lequel la seconde surface de préforme (32) est une surface interne, la première surface de préforme (30) est une surface externe supérieure de la première structure de préforme (14) et la surface externe (34) est une surface supérieure de la seconde structure de préforme (16) ;
le dépôt d'une première quantité d'une poudre métallique (18) sur une surface de plateforme (24), la surface de plateforme (24) étant située à une première hauteur ;
le dépôt d'une deuxième quantité de poudre métallique (18) sur la première surface de préforme (30), la première surface de préforme (30) étant située à une deuxième hauteur, et le dépôt d'une troisième quantité de poudre métallique (18) sur la surface externe (34), mais pas le dépôt de la poudre métallique (18) sur la seconde surface de préforme (32) ou sur la surface orientée vers le bas (36), dans lequel les première, deuxième et troisième quantités de poudre métallique (18) sont déposées à l'aide d'un dispositif de dépôt de poudre (20) disposé au-dessus de la plateforme de construction (12) à une troisième hauteur (E) supérieure à la deuxième hauteur ;
l'alimentation en énergie des première, deuxième et troisième quantités de poudre métallique (18) pour former une couche fondue ; et
la répétition des étapes de dépôt et d'alimentation en énergie pour former le composant hybride, le composant hybride comprenant les première et seconde structures de préforme (14, 16) et une pluralité de couches fondues.

5. Procédé selon la revendication 4, dans lequel la deuxième hauteur est supérieure à la première hauteur.

6. Procédé selon la revendication 4 ou 5, dans lequel le dispositif de dépôt de poudre (20) comprend une bande transporteuse rétractable (20).

7. Procédé selon la revendication 4, 5 ou 6, dans lequel la fixation des première et seconde structures de préforme (14, 16) comprend le brasage ou le soudage des première et seconde structures de préforme (14, 16) à une surface (24) de la plateforme de construction (12).

8. Procédé selon l'une quelconque des revendications 4 à 7, dans lequel l'alimentation en énergie de la poudre métallique (18) est effectuée par une source d'énergie dirigée (22), et, éventuellement, la source d'énergie dirigée (22) est un laser ou un faisceau d'électrons.

9. Procédé selon l'une quelconque des revendications 4 à 8, dans lequel la poudre métallique (18) comprend un métal ou un alliage métallique choisi dans le groupe constitué de l'aluminium, du nickel, du titane, du cobalt, du chrome et des combinaisons de ceux-ci.

10. Procédé selon l'une quelconque des revendications 4 à 9, dans lequel la première et/ou la seconde structure de préforme (14, 16) sont formées à partir du même matériau que la poudre métallique (18).
